# EUROPEAN PATENT APPLICATION

(11) **EP 4 501 279 A1**
(43) Date of publication of application: **05.02.2025**
(21) Application number: 23779130.6
(22) Date of filing: 28.02.2023
(51) Int. Cl.: A61C 17/00, A61C 17/02, F04B 9/02

(54) **ORAL CAVITY CLEANING DEVICE**

(30) Priority: 30.03.2022 JP 2022056640
(71) Applicant: Panasonic Intellectual Property Management Co., Ltd., Kadoma-shi, Osaka 571-0057 (JP)
(72) Inventor: NINOMIYA Yuki, Kadoma-shi, Osaka 571-0057 (JP); INOUE Hiroki, Kadoma-shi, Osaka 571-0057 (JP); TANIGUCHI Shinichi, Kadoma-shi, Osaka 571-0057 (JP); SHINODA Hiroki, Kadoma-shi, Osaka 571-0057 (JP)
(74) Representative: Grünecker Patent- und Rechtsanwälte PartG mbB
(86) International application number: PCT/JP2023/007201
(87) International publication number: WO 2023/189100

(57) **Abstract**

The present disclosure provides an oral cavity cleaning device with which an inside of an oral cavity can be cleaned more efficiently. The oral cavity cleaning device according to the present disclosure includes a tank configured to store a liquid, a nozzle to which the liquid stored in the tank is configured to be discharged into an oral cavity, pump (33) configured to suck the liquid stored in the tank and discharge the liquid through the nozzle, and pump drive mechanism (34) configured to drive pump (33). Pump (33) comprises piston (331) which is configured to be reciprocated linearly in one direction. In pump (33), a suction step of sucking the liquid into pump (33) and a discharge step of discharging the liquid from pump (33) are alternately performed by piston (331) which is configured to be reciprocated linearly. Piston (331) is configured to be reciprocated once such that a period of time taken for the suction step and a period of time taken for the discharge step are different from each other.

## Description

### TECHNICAL FIELD

The present disclosure relates to an oral cavity cleaning device.

### BACKGROUND ART

In related art, an oral cavity cleaning device driven by a pump is known as disclosed in PTL 1. In PTL 1, the pump is driven by driving a motor. Specifically, a rotational motion of the motor is converted into a reciprocating linear motion to cause the piston to reciprocate linearly in a cylinder, and a step of sucking a liquid into the pump and a step of discharging the liquid in the pump to the outside thereof are alternately performed. In this manner, the liquid is discharged into an oral cavity of a user via a member such as a nozzle, and the oral cavity of the user can be cleaned.

### Citation List

### Patent Literature

PTL 1: Unexamined Japanese Patent Publication No. 2011-200424

### SUMMARY OF THE INVENTION

### Technical problem

As described above, in the oral cavity cleaning device in which the piston is reciprocated linearly in the cylinder by using the motor, it is preferable that the oral cavity can be more efficiently cleaned.

Therefore, an object of the present disclosure is to provide an oral cavity cleaning device with which oral cavity can be cleaned more efficiently.

### Solution to problem

An oral cavity cleaning device according to an aspect of the present disclosure includes a tank configured to store a liquid, a nozzle to which the liquid stored in the tank is configured to be supplied via a liquid flow path and from which the liquid is configured to be discharged into an oral cavity, a pump that is disposed in the liquid flow path, the pump being configured to suck the liquid stored in the tank and being configured to discharge the liquid from the nozzle, and a pump drive mechanism configured to drive the pump. The pump comprises a piston which is configured to be reciprocated linearly in one direction, the piston is configured to be reciprocated linearly so as to alternately perform a suction step of sucking the liquid into the pump and a discharge step of discharging the liquid from the pump, and the piston is configured to be reciprocated once in such a way that a period of time taken for the suction step and a period of time taken for the discharge step are different from each other.

### Advantageous effect of invention

According to the present disclosure, it is possible to obtain the oral cavity cleaning device with which the oral cavity can be cleaned more efficiently.

### BRIEF DESCRIPTION OF THE DRAWINGS

Fig. 1 is a diagram schematically illustrating an oral cavity cleaning device according to a first exemplary embodiment.
Fig. 2 is a diagram schematically illustrating a pump and a pump drive mechanism of the oral cavity cleaning device according to the first exemplary embodiment.
Fig. 3 is a side view illustrating a pump drive mechanism with a piston of the oral cavity cleaning device according to the first exemplary embodiment.
Fig. 4 is a plan view illustrating the pump drive mechanism with the piston of the oral cavity cleaning device according to the first exemplary embodiment.
Fig. 5 is a sectional view taken along line A-A of Fig. 4.
Fig. 6 is a graph in which a piston displacement amount and a liquid discharge amount in a case where a period of time taken for a discharge step is shorter than a period of time taken for a suction step are compared with a piston displacement amount and a liquid discharge amount of a normal pump.
Fig. 7 is a graph in which a piston displacement amount and a liquid discharge amount in a case where the period of time taken for the discharge step is longer than the period of time taken for the suction step are compared with a piston displacement amount and a liquid discharge amount of a normal pump.
Fig. 8 is a diagram schematically illustrating an oral cavity cleaning device according to a second exemplary embodiment.
Fig. 9 is a diagram schematically illustrating a pump and a pump drive mechanism of the oral cavity cleaning device according to the second exemplary embodiment.
Fig. 10 is a perspective view of a pump drive mechanism with a piston of the oral cavity cleaning device according to the second exemplary embodiment as viewed from one direction.
Fig. 11 is a perspective view of the pump drive mechanism with the piston of the oral cavity cleaning device according to the second exemplary embodiment as viewed from another direction.
Fig. 12 is a side view illustrating the pump drive mechanism with the piston of the oral cavity cleaning device according to the second exemplary embodiment.
Fig. 13 is a plan view illustrating the pump drive mechanism with the piston of the oral cavity cleaning device according to the second exemplary embodiment.
Fig. 14 is a sectional view taken along line B-B in Fig. 13.
Fig. 15 is a graph in which a current value of a motor in a case where an assist mechanism is provided is compared with a current value of the motor in a case where the assist mechanism is not provided.
Fig. 16 is a diagram schematically illustrating a first modification of the assist mechanism included in the pump drive mechanism of the oral cavity cleaning device according to the second exemplary embodiment.
Fig. 17 is a diagram schematically illustrating a second modification of the assist mechanism included in the pump drive mechanism of the oral cavity cleaning device according to the second exemplary embodiment.
Fig. 18 is a diagram schematically illustrating an oral cavity cleaning device according to a third exemplary embodiment.

### DESCRIPTION OF EMBODIMENT

Hereinafter, exemplary embodiments will be described in detail with reference to the drawings. However, detailed description more than necessary may not be described. For example, detailed description of already well-known matters and duplicated description of substantially identical elements may not be described.

Note that, the accompanying drawings and the following description are provided for those skilled in the art to fully understand the present disclosure, and are not intended to limit the subject matter described in the claims in any way.

Substantially similar constitutional elements are included in a plurality of exemplary embodiments to be described later and modifications thereof. Accordingly, in the following description, common reference marks are given to substantially similar constitutional elements, and the repeated explanation of these constitutional elements is omitted.

The following exemplary embodiments will be described with a vertical direction defined in a state where an oral cavity cleaning device is disposed such that a nozzle is positioned above.

### (First exemplary embodiment)

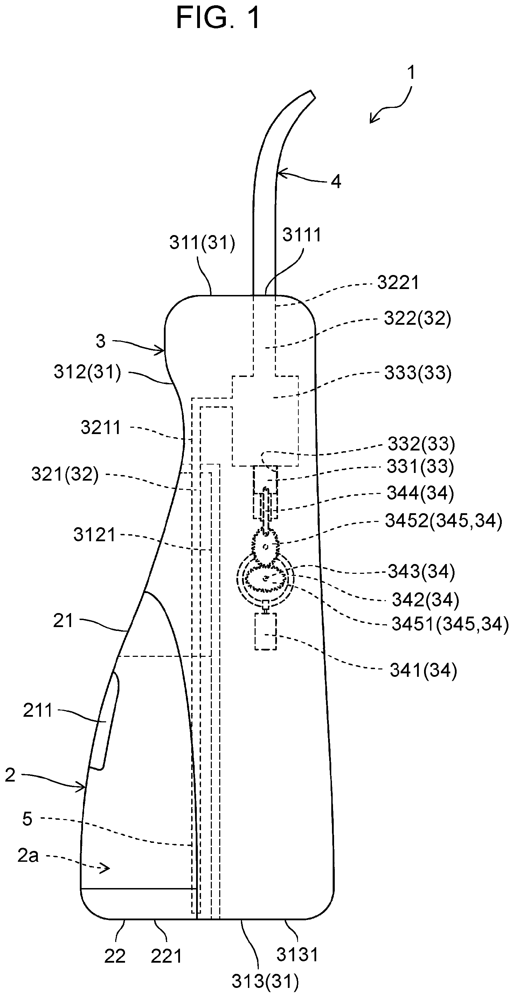

Fig. 1 is a diagram schematically illustrating oral cavity cleaning device 1 according to a first exemplary embodiment. As illustrated in Fig. 1, oral cavity cleaning device 1 according to the present exemplary embodiment includes tank 2, device body 3, and nozzle 4.

Tank 2 is formed in a bottomed tubular shape that is open upward and has a lower end closed, and reservoir 2a in which liquid can be stored is formed inside tank 2. Although water is available as the liquid stored in reservoir 2a, the liquid is not limited to water, and various liquids are available. For example, a cleaning liquid in which a cleaning agent is mixed in water is available.

In the present exemplary embodiment, tank 2 is detachably attached to device body 3, and tank 2 can be cleaned in a state of being separated from device body 3. In this manner, tank 2 can be kept cleaner. Such a tank 2 can be made of, for example, a polypropylene resin or the like to be cleaned by a dishwasher.

In the present exemplary embodiment, tank 2 includes tubular body 21 having a substantially tubular shape that is open vertically, and bottom wall 22 that closes a lower opening of tubular body 21. A side portion (that is, tubular body 21) of tank 2 is provided with a liquid supply hole (not illustrated) through which liquid can be injected into reservoir 2a. A liquid supply hole (not illustrated) through which liquid can be injected into reservoir 2a is formed in a side portion (that is, tubular body 21) of tank 2, and the liquid supply hole is closed by liquid supply lid 211. In this manner, in a state where tank 2 is attached to device body 3, liquid can be supplied to reservoir 2a in tank 2.

On the other hand, device body 3 includes housing 31 constituting an outer shell. Housing 31 has a substantially tubular shape elongated in the vertical direction, and main constitutional elements such as pump 33, which will described later, are accommodated in the tube of housing 31. Housing 31 has a substantially central portion in a longitudinal direction that is narrowed, and has a shape that allows a user to easily hold oral cavity cleaning device 1 by hand at the time of using the oral cavity cleaning device 1.

In the present exemplary embodiment, housing 31 includes top wall 311, peripheral wall 312 having a substantially tubular shape extending downward from an outer peripheral edge of top wall 311, and bottom wall 313 connected to a lower end of peripheral wall 312.

Top wall 311 is provided with nozzle attachment part 3111. Nozzle 4 through which a liquid can be discharged (that is, ejected) from the distal end thereof is detachably attached to nozzle attachment part 3111. Nozzle 4 is formed in a hollow elongated shape.

Peripheral wall 312 is provided with a button (not illustrated) for detaching nozzle 4 from housing 31 (that is, one element of device body 3) and a power switch (not illustrated) for starting or stopping oral cavity cleaning device 1 (that is, on and off of the power are switched).

In the present exemplary embodiment, a lower portion of peripheral wall 312 is provided with recess 3121 recessed inward, and tank 2 is detachably attached to recess 3121.

In a state where tank 2 is attached to recess 3121, bottom surface 221 of bottom wall 22 of tank 2 and bottom surface 3131 of bottom wall 313 of housing 31 are formed to be substantially flush with each other. In this manner, oral cavity cleaning device 1 can be allowed to stand in an attitude where nozzle 4 faces upward at the time of not using oral cavity cleaning device 1.

Liquid flow path 32 for supplying the liquid stored in tank 2 to nozzle 4 is formed inside housing 31 (that is, one element of device body 3).

In the present exemplary embodiment, liquid flow path 32 includes suction path 321 disposed upstream of liquid flow path 32 and discharge path 322 disposed downstream of liquid flow path 32. Suction path 321 and discharge path 322 are connected via pump 33. As described above, in the present exemplary embodiment, pump 33 is disposed in the middle of liquid flow path 32.

Here, in the present exemplary embodiment, suction path 321 is defined by hollow pipe 3211 such as a pipe, and pipe 3211 is formed to penetrate peripheral wall 312 and have a distal end (that is, upstream end) facing recess 3121. Tube 5 having flexibility is attached to the distal end (that is, upstream end) of pipe 3211 facing recess 3121, and the liquid stored in tank 2 is supplied into liquid flow path 32 via tube 5. As described above, tube 5 having flexibility is used, and thus, tank 2 can be smoothly attached to and detached from device body 3.

Discharge path 322 is also defined by hollow pipe 3221 such as a pipe, pipe 3221 is formed to penetrate top wall 311 and open upward, and the distal end of pipe 3221 (that is, downstream end) communicates with nozzle 4.

A suction valve (not illustrated) is provided between pump chamber 333 and suction path 321, and a discharge valve (not illustrated) is provided between pump chamber 333 and discharge path 322.

As described above, in the present exemplary embodiment, liquid flow path 32 is provided inside housing 31 (that is, one element of device body 3) in a state where one end communicates with an inner space of nozzle attachment part 3111 and the other end faces recess 3121. Tube 5 is attached to the other end facing recess 3121. In this manner, the liquid in tank 2 introduced via tube 5 passes through liquid flow path 32, and is supplied to nozzle 4.

In the present exemplary embodiment, tube 5 is integrally attached to the distal end (that is, upstream end) of pipe 3211, and is disposed in reservoir 2a of tank 2 in a state where tank 2 is attached to device body 3. The liquid stored in reservoir 2a is introduced into housing 31 (that is, one element of device body 3) via tube 5.

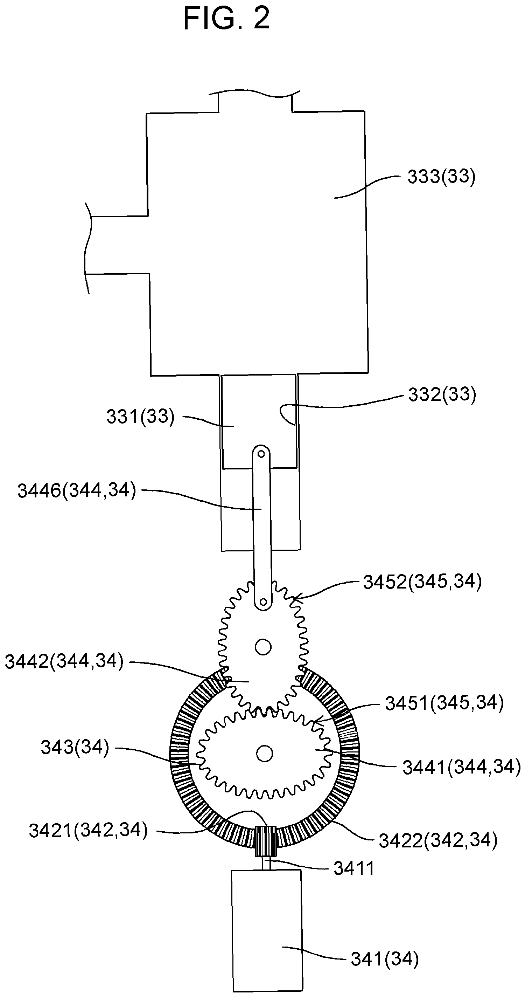

Fig. 2 is a diagram schematically illustrating pump 33 and pump drive mechanism 34 of oral cavity cleaning device 1 according to the first exemplary embodiment. As illustrated in Figs. 1 and 2, pump drive mechanism 34 is disposed inside housing 31 (that is, one element of device body 3). Pump 33 is operated by pump drive mechanism 34, and thus, the liquid in reservoir 2a is sucked up through tube 5 and passes through liquid flow path 32 to be discharged (that is, ejected) from the distal end of nozzle 4.

As described above, oral cavity cleaning device 1 according to the present exemplary embodiment is a device that includes pump 33 and pump drive mechanism 34 that drives pump 33. In oral cavity cleaning device 1, the liquid is discharged by driving pump 33.

In the present exemplary embodiment, pump 33 includes pump chamber 333 with which suction path 321 and discharge path 322 communicate with each other, cylinder 332 formed to communicate with a lower end of pump chamber 333, and piston 331 disposed in cylinder 332.

Piston 331 is coupled to pump drive mechanism 34, and is reciprocated linearly in the vertical direction (that is, one direction) in cylinder 332 by pump drive mechanism 34. Piston 331 is reciprocated linearly in the vertical direction in cylinder 332, and thus, a volume of pump chamber 333 is changed.

Specifically, when piston 331 moves downward in cylinder 332, the volume of pump chamber 333 increases, and the liquid in tank 2 flows into pump chamber 333 via tube 5 and suction path 321. Thereafter, in a state where the liquid has flown into pump chamber 333, when piston 331 moves upward in cylinder 332, the volume of pump chamber 333 decreases, and the liquid in pump chamber 333 is supplied to nozzle 4 via discharge path 322. The liquid supplied to nozzle 4 is discharged (that is, ejected) from the distal end of nozzle 4 to the outside thereof.

As described above, in the present exemplary embodiment, a suction step of sucking the liquid into pump chamber 333 is performed by moving piston 331 downward in cylinder 332, and a discharge step of discharging the liquid from pump chamber 333 to the outside thereof is performed by moving the piston 331 upward. That is, the suction step and the discharge step are alternately performed by reciprocating piston 331 linearly between a top dead center and a bottom dead center. Thus, when piston 331 is reciprocated once in the vertical direction from the top dead center, the suction step and the discharge step are performed once each.

With such a configuration, the liquid is intermittently discharged from the distal end of nozzle 4 attached to device body 3.

In the present exemplary embodiment, as illustrated in Figs. 1 and 2, pump drive mechanism 34 includes motor 341, and piston 331 is reciprocated linearly in the vertical direction in cylinder 332 by driving motor 341.

Specifically, pump drive mechanism 34 has motor 341 and conversion mechanism 344 that converts a rotational motion of motor 341 into the reciprocating linear motion. Piston 331 is connected to conversion mechanism 344, and piston 331 is reciprocated linearly in the vertical direction in cylinder 332. Motor 341 is driven by an electric power supplied from a battery (e.g., a rechargeable battery or a dry battery) housed inside device body 3, or an external electric power.

In the present exemplary embodiment, pump drive mechanism 34 includes speed reduction mechanism 342 that reduces a rotational speed of motor 341, and transfer mechanism 343 that transfers a rotational motion reduced by speed reduction mechanism 342 to conversion mechanism 344. Thus, in the present exemplary embodiment, conversion mechanism 344 performs the conversion into the reciprocating linear motion in a state where speed reduction mechanism 342 reduces the rotational speed (that is, rotation speed) of motor 341 to a predetermined rotational speed (that is, rotation speed).

At this time, a rate of speed reduction by speed reduction mechanism 342 is adjusted, and thus, it is possible to set a period of time taken when piston 331 reciprocates once (that is, a period of time during which one suction step and one discharge step are performed) to be a desired period of time. In consideration of usability of oral cavity cleaning device 1, a piston pulsation number per minute (that is, the number of times of reciprocations of piston 331 per minute) is preferably 500 rpm to 3000 rpm. Thus, the period of time taken when piston 331 is reciprocated once (that is, the period of time during which one suction step and one discharge step are performed) is preferably 0.02 seconds to 0.12 seconds. The period of time taken when piston 331 is reciprocated once is also a period of time required for one cycle of pump 33.

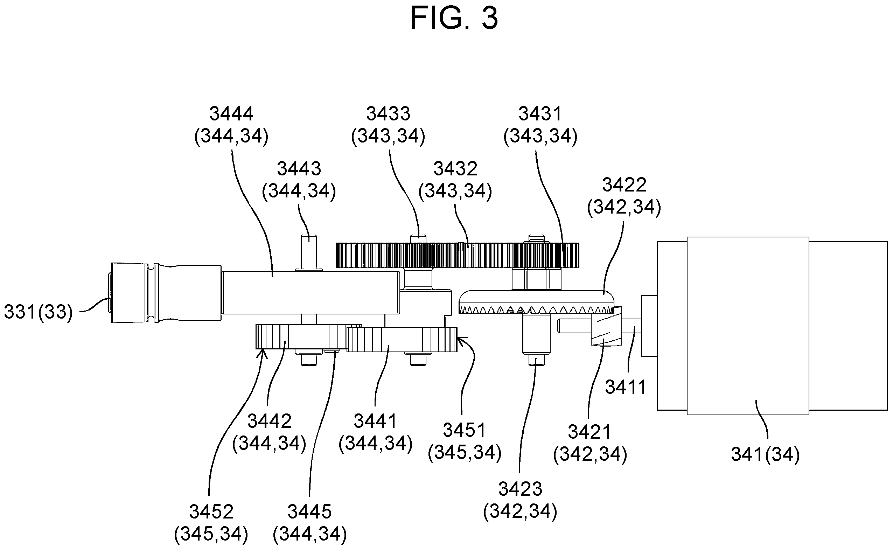

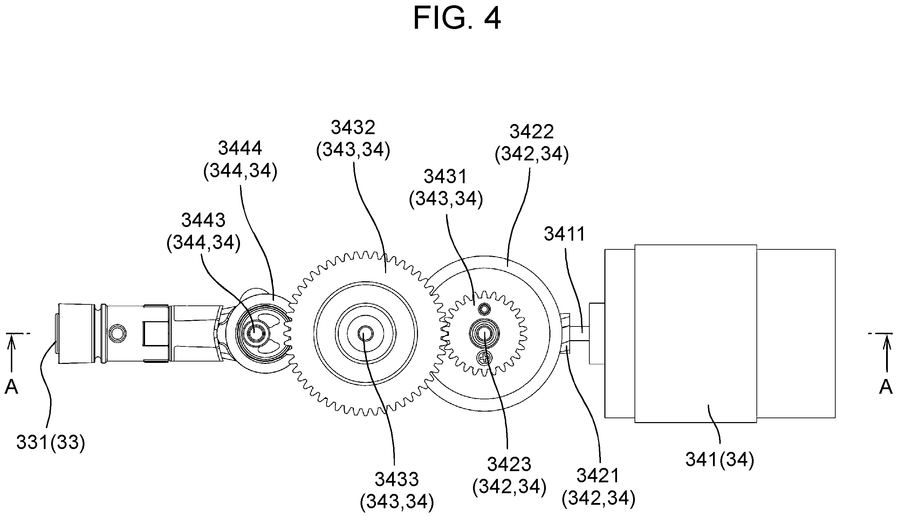

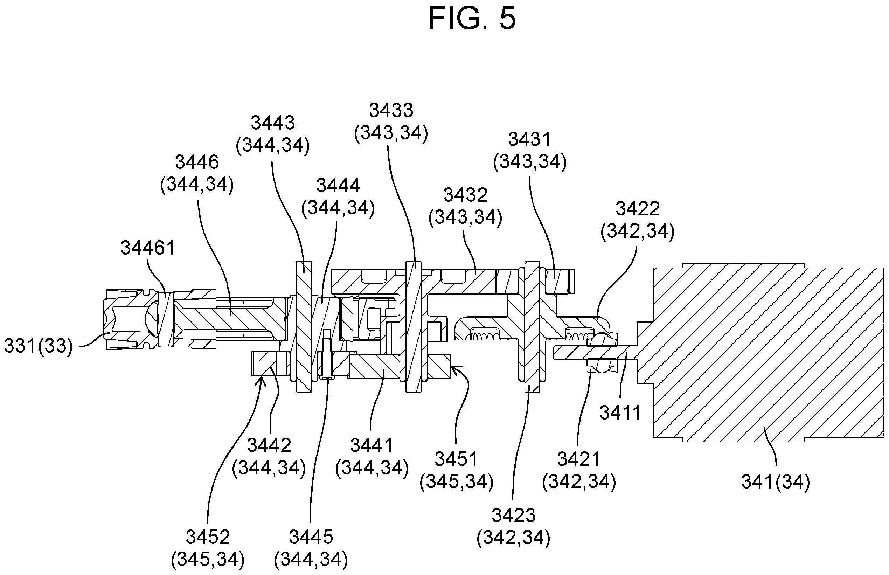

Fig. 3 is a side view illustrating pump drive mechanism 34 with a piston of oral cavity cleaning device 1 according to the first exemplary embodiment. Fig. 4 is a plan view illustrating pump drive mechanism 34 with the piston of oral cavity cleaning device 1 according to the first exemplary embodiment. Fig. 5 is a sectional view taken along line A-A of Fig. 4. In the present exemplary embodiment, as illustrated in Figs. 3 to 5, speed reduction mechanism 342 includes pinion gear 3421 that is attached to motor shaft 3411 of motor 341 and rotates in conjunction with the rotation of motor shaft 3411, and speed reduction gear 3422 that meshes with pinion gear 3421. Speed reduction mechanism 342 includes first output shaft 3423 that supports speed reduction gear 3422 and rotates in conjunction with the rotation of speed reduction gear 3422. A gear ratio between pinion gear 3421 and speed reduction gear 3422 is set to a predetermined value, and thus, the rotational speed (that is, rotation speed) of motor 341 is reduced to a predetermined rotational speed (that is, rotation speed).

Transfer mechanism 343 is connected to first output shaft 3423. Specifically, transfer mechanism 343 includes first transfer gear 3431 that is attached to first output shaft 3423 and rotates in conjunction with the rotation of first output shaft 3423. Transfer mechanism 343 also includes second transfer gear 3432 that meshes with first transfer gear 3431. Transfer mechanism 343 includes second output shaft 3433 that supports second transfer gear 3432 and rotates in conjunction with the rotation of second transfer gear 3432. The rotation of motor 341 of which the speed is reduced by speed reduction mechanism 342 is transferred to conversion mechanism 344 via second output shaft 3433.

Conversion mechanism 344 includes first gear 3441 that is attached to second output shaft 3433 and rotates in conjunction with the rotation of second output shaft 3433. Conversion mechanism 344 includes second gear 3442 that meshes with first gear 3441. Conversion mechanism 344 includes third output shaft 3443 that supports second gear 3442 and rotates in conjunction with the rotation of second gear 3442.

Conversion mechanism 344 includes cam 3444 that is attached to third output shaft 3443 and rotates in conjunction with the rotation of third output shaft 3443, and rod 3446 that is reciprocated linearly in the vertical direction by cam 3444. Cam 3444 is a member that converts the rotation of motor 341 into an operation force in an axial direction, and is fixed to second gear 3442 by screw 3445 in the present exemplary embodiment. Rod 3446 is reciprocated linearly in the vertical direction of device body 3 by the operation force in the axial direction converted by cam 3444. As illustrated in Fig. 2, rod 3446 may be directly attached to second gear 3442 (that is, without the cam interposed therebetween).

Piston 331 is attached to a distal end (that is, upper end) of rod 3446 by coupling shaft 34461. In this manner, piston 331 is reciprocated linearly in the vertical direction in cylinder 332.

Pump drive mechanism 34 is not limited to the above-described configuration, and may have various configurations. For example, speed reduction gear 3422 and first transfer gear 3431 can be integrated, or second transfer gear 3432 and first gear 3441 can be integrated. It is also possible to integrate second gear 3442 and cam 3444.

In the present exemplary embodiment, an inside of an oral cavity can be cleaned more efficiently.

Specifically, pump drive mechanism 34 includes transmission mechanism 345 that sets a moving speed of piston 331 when the discharge step is performed to be different from a moving speed of piston 331 when the suction step is performed. Piston 331 is reciprocated once such that a period of time taken for the discharge step is shorter than a period of time taken for the suction step.

In the present exemplary embodiment, transmission mechanism 345 using non-circular gears is used, and thus, the moving speed of piston 331 when the discharge step is performed is different from the moving speed of piston 331 when the suction step is performed. That is, in the present exemplary embodiment, transmission mechanism 345 has non-circular gears. Specifically, first gear 3441 and second gear 3442 meshing with each other are non-circular gears. The non-circular gear can be made of a metal material or can be made of a resin material.

In the present exemplary embodiment, elliptical gears are used as the non-circular gears, and transmission mechanism 345 has the elliptical gears as the non-circular gear. Specifically, first gear 3441 and second gear 3442 meshing with each other are elliptical gear 3451 and elliptical gear 3452, respectively. Herein, in order to distinguish the term "elliptical gears", elliptical gear 3451 and elliptical gear 3452 may be referred to as first elliptical gear 3451 and second elliptical gear 3452, respectively.

Ellipticity of elliptical gears 3451 and 3452, a position where the output shaft (that is, at least one of second output shaft 3433 and third output shaft 3443) is attached, and a gear ratio between elliptical gear 3451 and elliptical gear 3452 are appropriately set, and thus, a ratio between the period of time taken for the discharge step and the period of time taken for the suction step is set to 1 : X (where X > 1). At this time, a feed ratio range is preferably set to 1.5 to 5.0 in consideration of a cleaning effect of the inside of the oral cavity. That is, when the ratio between the period of time taken for the discharge step and the period of time taken for the suction step is 1 : X, a value of X is preferably set to be from 1.5 to 5.0 inclusive.

As described above, in the present exemplary embodiment, pump drive mechanism 34 includes transmission mechanism 345 that sets the moving speed of piston 331 when the discharge step is performed to be different from the moving speed of piston 331 when the suction step is performed. Transmission mechanism 345 has non-circular gears (that is, first gear 3441 and second gear 3442). Transmission mechanism 345 may have only one non-circular gear, or may include three or more non-circular gears.

In the present exemplary embodiment, transmission mechanism 345 has elliptical gears 3451 and 3452 as the non-circular gears, and transmission mechanism 345 includes two elliptical gears 3451 and 3452. The transmission mechanism may have only one elliptical gear, or may have three or more elliptical gears.

The non-circular gear is not limited to the elliptical gear, and various non-circular gears can be used. For example, a polygonal gear having a rounded apex portion can be used, or a gear having a shape having a portion curved in a recess shape can be used.

In the present exemplary embodiment, since the ratio between the period of time taken for the discharge step and the period of time taken for the suction step is merely changed by using a pair of elliptical gears, the period of time required for one cycle of pump 33 is the same as the period of time in the case of normal pump 33 (that is, in a case where a circular gear is used).

When pump 33 is driven by pump drive mechanism 34 having such a configuration, the moving speed (that is, an absolute value of the moving speed) of piston 331 at the time of the discharge step can be increased and the moving speed (that is, an absolute value of the moving speed) of piston 331 at the time of the suction step can be decreased. That is, the period of time taken for the discharge step can be set to be shorter than the period of time taken for the suction step.

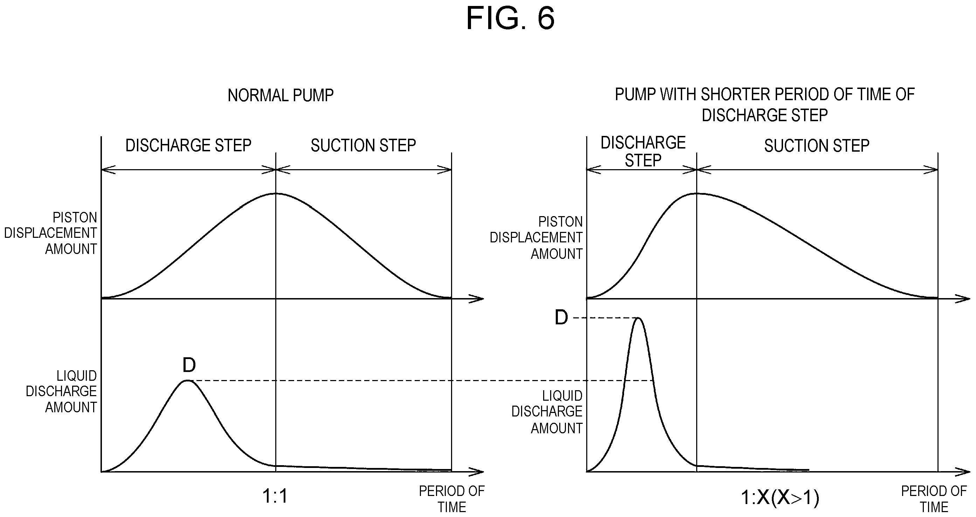

As a result, as illustrated in Fig. 6, maximum discharge amount D can be set to be larger than a maximum discharge amount of a normal pump in which the ratio between the period of time taken for the discharge step and the period of time taken for the suction step is 1 : 1. Here, Fig. 6 is a graph in which a piston displacement amount and a liquid discharge amount in a case where the period of time taken for the discharge step is set to be shorter than the period of time taken for the suction step are compared with a piston displacement amount and a liquid discharge amount of a normal pump. In the present exemplary embodiment, a maximum value of discharge amounts at the moments of the discharge step is set as maximum discharge amount D. That is, the period of time taken for the discharge step is equally divided by a predetermined minute period of time close to zero as much as possible, and a maximum discharge flow rate among discharge flow rates discharged in sections is set as maximum discharge amount D. Thus, in a case where the discharge amount at the moments when the discharge step is performed draws a graph illustrated in Fig. 6, a value of a discharge amount at a point positioned at an uppermost position in the graph is maximum discharge amount D.

In the present exemplary embodiment, a total amount of liquid discharged in the discharge step is the same. At this time, in consideration of cleaning efficiency of the inside of the oral cavity and the usability of oral cavity cleaning device 1, a total amount of liquid discharge in the discharge step of the device is preferably 50 ml/min to 450 ml/min.

As described above, when oral cavity cleaning device 1 equipped with pump drive mechanism 34 according to the present exemplary embodiment is used, it is possible to more efficiently clean the inside of the oral cavity by minimizing unnecessary discharge of liquid that is not used for cleaning. Maximum discharge amount D can be increased even in a case where the total amount of liquid discharged in one reciprocation of piston 331 is the same. Thus, a discharge pressure of the liquid discharged from oral cavity cleaning device 1 is increased, and the inside of the oral cavity can be more efficiently cleaned.

A switch for selecting forward rotation and reverse rotation of motor 341 is provided, and thus, motor 341 can also be reversely rotated. When motor 341 is reversely rotated in pump drive mechanism 34 according to the present exemplary embodiment, the ratio between the period of time taken for the discharge step and the period of time taken for the suction step is 1 : X (where 0 < X < 1), and the moving speed of piston 331 at the time of the discharge step (that is, the absolute value of the moving speed) is decreased, and the moving speed of piston 331 at the time of the suction step (that is, the absolute value of the moving speed) is increased. That is, the period of time taken for the discharge step is longer than the period of time taken for the suction step.

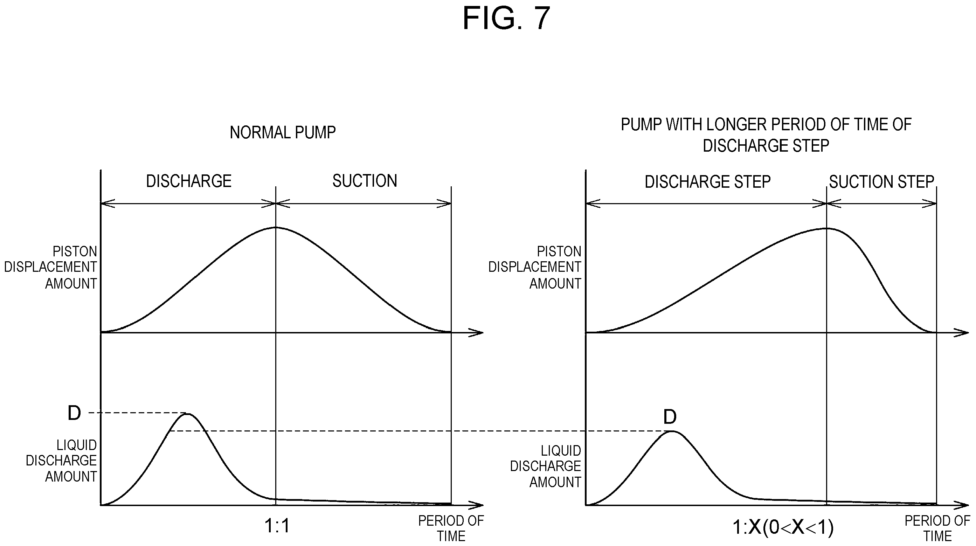

Thus, as illustrated in Fig. 7, maximum discharge amount D is smaller than the maximum discharge amount of the normal pump in which the ratio between the period of time taken for the discharge step and the period of time taken for the suction step is 1:1, and discharge can be performed for a relatively long period of time. Fig. 7 is a graph in which a piston displacement amount and a liquid discharge amount in a case where the period of time taken for the discharge step is longer than the period of time taken for the suction step are compared with a piston displacement amount and a liquid discharge amount of a normal pump. In this case, the total amount of liquid discharged in the discharge step is also the same.

As described above, with the configuration in which the forward rotation and the reverse rotation of motor 341 can be selected, a water flow (for example, force of water and discharge period of time) at the time of liquid discharge can be set to be changed, and it is possible to properly select the water flow in accordance with the preference and use of the user.

In a case where a feed ratio range at the time of the forward rotation of motor 341 is set within a range of 1.5 to 5.0, a feed ratio range at the time of the reverse rotation of motor 341 is set within a range of 0.2 to 0.67. That is, in a case where the ratio between the period of time taken for the discharge step and the period of time taken for the suction step at the time of the reverse rotation of motor 341 is 1 : X, a value of X is set in a range of 0.2 to 0.67.

### (Second exemplary embodiment)

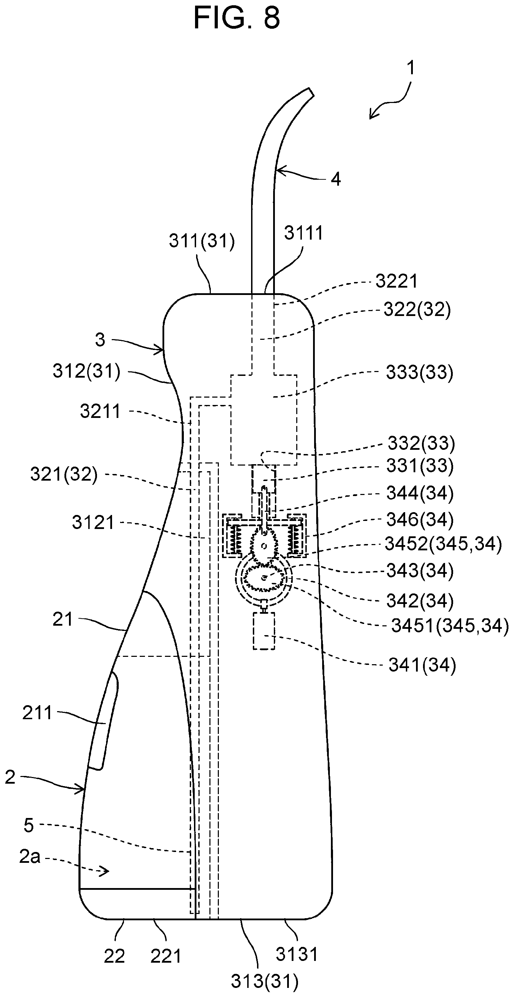

Fig. 8 is a diagram schematically illustrating oral cavity cleaning device 1 according to a second exemplary embodiment. Oral cavity cleaning device 1 according to the present exemplary embodiment basically has a configuration substantially similar to oral cavity cleaning device 1 described in the first exemplary embodiment. That is, as illustrated in Fig. 8, oral cavity cleaning device 1 according to the present exemplary embodiment includes tank 2, device body 3, and nozzle 4.

In the present exemplary embodiment, tank 2 is detachably attached to device body 3, and tank 2 can be cleaned in a state of being separated from device body 3.

Device body 3 includes housing 31 constituting an outer shell, and housing 31 includes top wall 311, peripheral wall 312 having a substantially tubular shape extending downward from an outer peripheral edge of top wall 311, and bottom wall 313 connected to a lower end of peripheral wall 312.

Top wall 311 is provided with nozzle attachment part 3111. Nozzle 4 through which a liquid can be discharged (that is, ejected) from the distal end thereof is detachably attached to nozzle attachment part 3111. Nozzle 4 is formed in a hollow elongated shape.

Liquid flow path 32 for supplying the liquid stored in tank 2 to nozzle 4 is formed inside housing 31 (that is, one element of device body 3).

Also in the present exemplary embodiment, liquid flow path 32 includes suction path 321 disposed upstream of liquid flow path 32 and discharge path 322 disposed downstream of liquid flow path 32. Suction path 321 and discharge path 322 are connected via pump 33. As described above, also in the present exemplary embodiment, pump 33 is also disposed in the middle of liquid flow path 32.

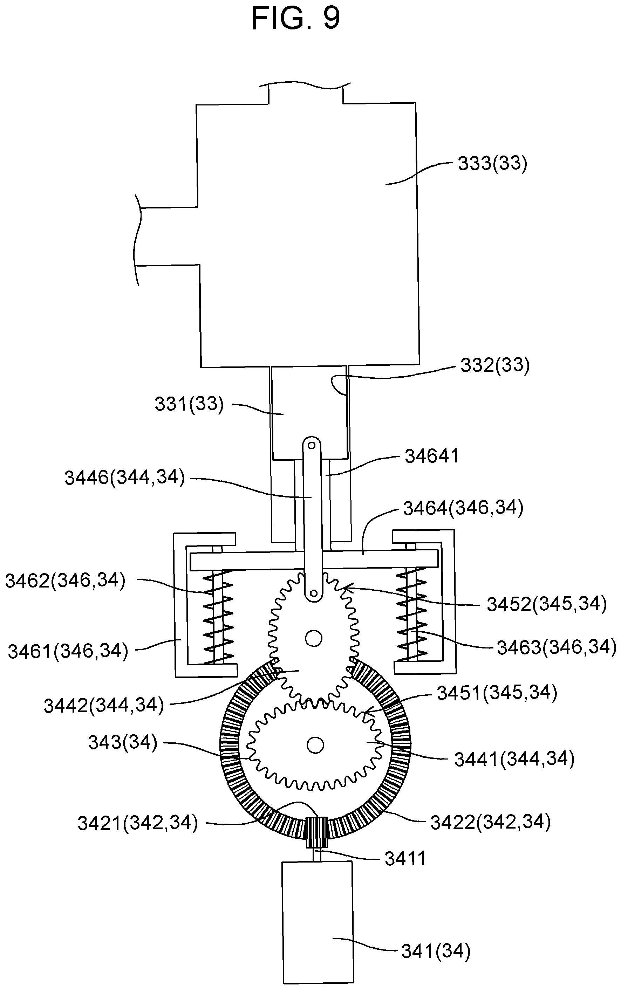

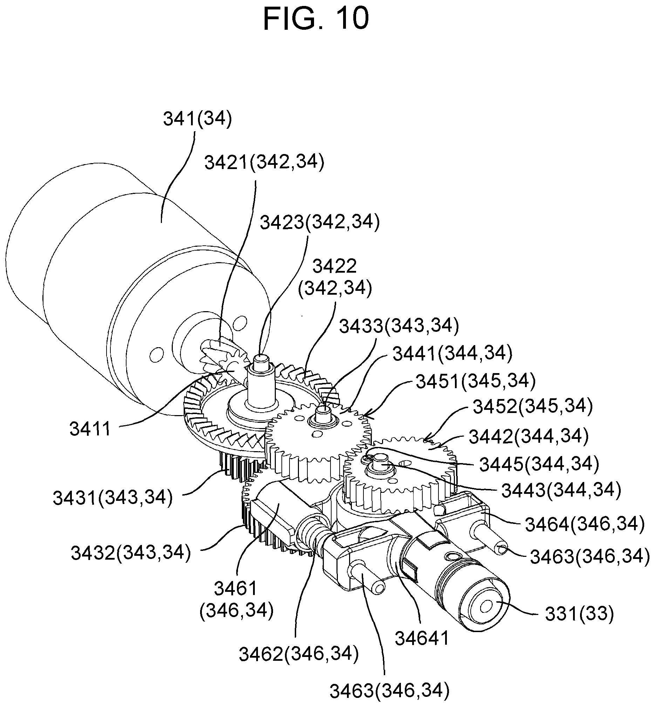

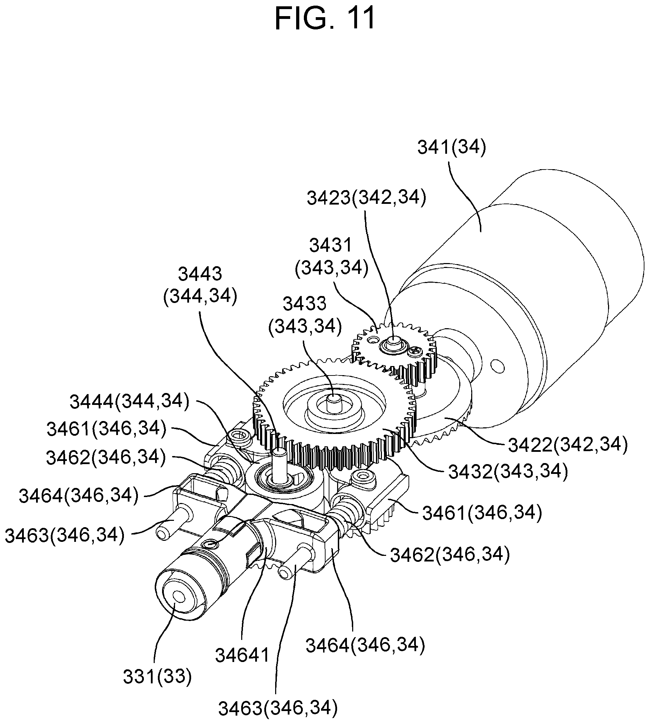

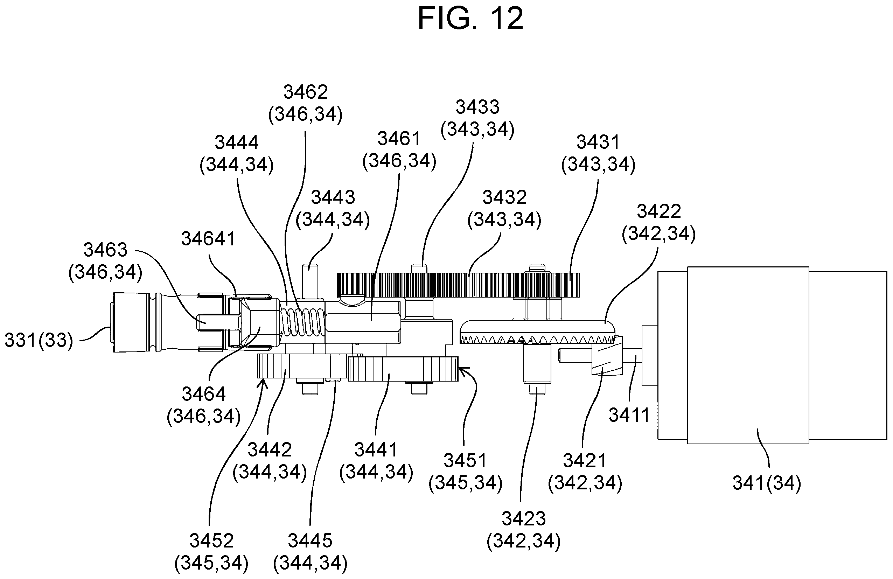

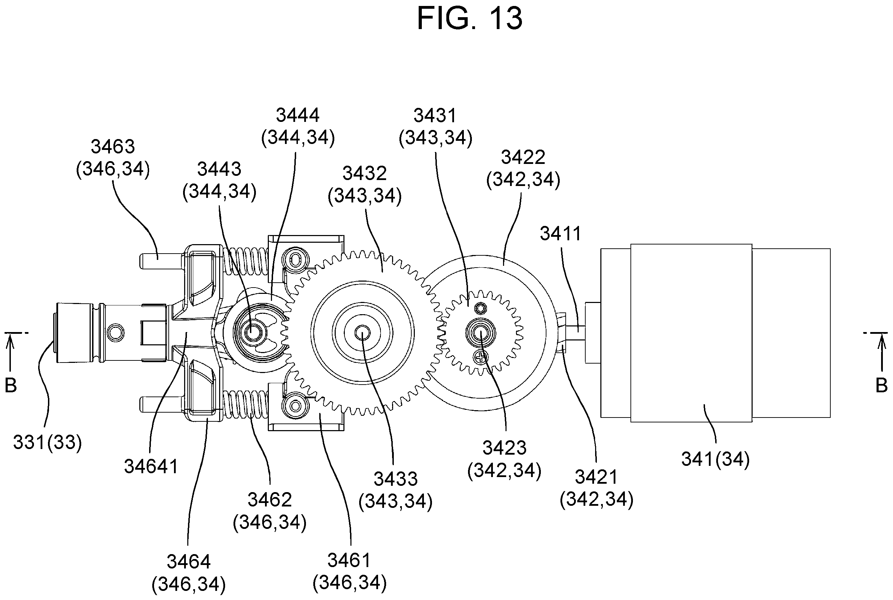

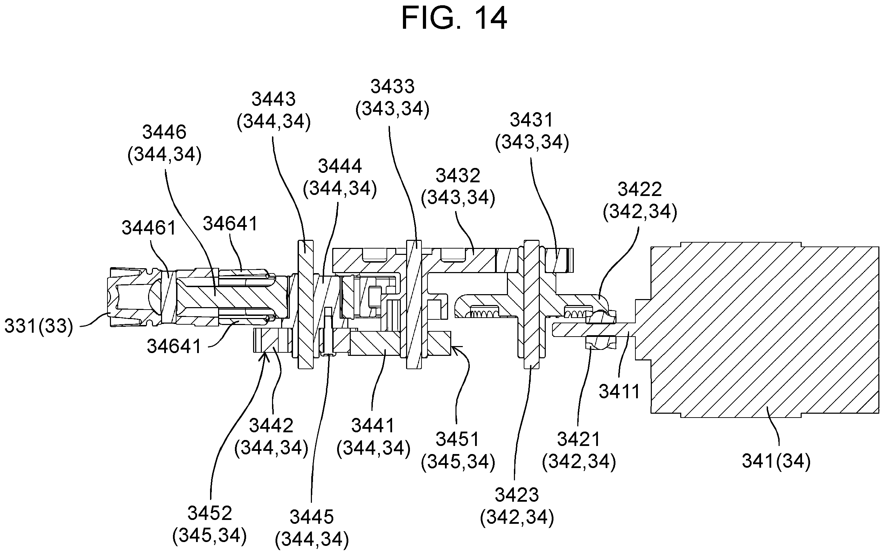

Fig. 9 is a diagram schematically illustrating pump 33 and pump drive mechanism 34 of oral cavity cleaning device 1 according to the second exemplary embodiment. Fig. 10 is a perspective view of pump drive mechanism 34 with a piston of oral cavity cleaning device 1 according to the second exemplary embodiment as viewed from one direction. Fig. 11 is a perspective view of pump drive mechanism 34 with the piston of oral cavity cleaning device 1 according to the second exemplary embodiment as viewed from another direction. Fig. 12 is a side view illustrating pump drive mechanism 34 with the piston of oral cavity cleaning device 1 according to the second exemplary embodiment. Fig. 13 is a plan view illustrating pump drive mechanism 34 with the piston of oral cavity cleaning device 1 according to the second exemplary embodiment. Fig. 14 is a sectional view taken along line B-B in Fig. 13. In the present exemplary embodiment, as illustrated in Figs. 8 to 14, pump drive mechanism 34 is also disposed inside housing 31 (that is, one element of device body 3). Pump 33 is operated by pump drive mechanism 34, and thus, the liquid in reservoir 2a is sucked up through tube 5 and passes through liquid flow path 32 to be discharged (that is, ejected) from the distal end of nozzle 4.

As described above, oral cavity cleaning device 1 according to the present exemplary embodiment is also a device that includes pump 33 and pump drive mechanism 34 that drives pump 33. In oral cavity cleaning device 1, the liquid is discharged by driving pump 33.

In addition, also in the present exemplary embodiment, pump 33 includes pump chamber 333 with which suction path 321 and discharge path 322 communicate, cylinder 332 formed to communicate with a lower end of pump chamber 333, and piston 331 coupled to pump drive mechanism 34 and disposed in cylinder 332. Piston 331 is reciprocated linearly in the vertical direction in cylinder 332, and thus, a volume of pump chamber 333 is changed.

As described above, also in the present exemplary embodiment, a suction step of sucking the liquid into pump chamber 333 is performed by moving piston 331 downward in cylinder 332, and a discharge step of discharging the liquid from pump chamber 333 to the outside is performed by moving the piston 331 upward.

In the present exemplary embodiment, an inside of an oral cavity can be cleaned more efficiently.

Specifically, pump drive mechanism 34 includes transmission mechanism 345 that sets a moving speed of piston 331 when the discharge step is performed to be different from a moving speed of piston 331 when the suction step is performed. Piston 331 is reciprocated once such that a period of time taken for the discharge step is shorter than a period of time taken for the suction step.

Also in the present exemplary embodiment, pump drive mechanism 34 includes transmission mechanism 345 that sets a moving speed of piston 331 when the discharge step is performed to be different from a moving speed of piston 331 when the suction step is performed. Transmission mechanism 345 has non-circular gears (that is, first gear 3441 and second gear 3442). Also in the present exemplary embodiment, transmission mechanism 345 has elliptical gears 3451 and 3452 as non-circular gears, and transmission mechanism 345 includes two elliptical gears 3451 and 3452.

In this manner, when oral cavity cleaning device 1 equipped with pump drive mechanism 34 according to the present exemplary embodiment is used, it is possible to more efficiently clean the inside of the oral cavity by minimizing unnecessary discharge of liquid that is not used for cleaning.

Here, in the present exemplary embodiment, pump drive mechanism 34 includes assist mechanism 346 that assists the movement of piston 331.

Assist mechanism 346 includes spring bearing 3461, a pair of shafts 3463 fixed to both ends of spring bearing 3461, and slider 3464 slidably attached to the pair of shafts 3463 in the axial direction. At this time, a pair of coil springs 3462 (that is, an example of a biasing member) is attached to the pair of shafts 3463, respectively. Slider 3464 is biased upward by the pair of coil springs 3462 (that is, an example of the biasing member). As described above, in the present exemplary embodiment, assist mechanism 346 includes coil spring 3462 (that is, an example of the biasing member) that biases piston 331 upward (that is, one direction).

Pressing part 34641 of slider 3464 is brought into contact with the lower end of cylinder 332, and thus, cylinder 332 is biased upward by an elastic restoring force of the pair of coil springs 3462 (that is, an example of the biasing member). The biasing member may be any member that can be elastically deformed, and not only a spring such as a coil spring but also a member such as rubber can be used.

Here, in the present exemplary embodiment, as described above, the period of time taken for the discharge step is shorter than the period of time taken for the suction step. Thus, assist mechanism 346 according to the present exemplary embodiment assists the movement of piston 331 when the discharge step is performed. Within one reciprocation of piston 331, the discharge step takes a shorter period of time than the suction step.

In this way, since the movement of piston 331 is assisted when the discharge step in which the moving speed of piston 331 increases and a load on motor 341 increases is performed, the load on motor 341 can be reduced. However, when assist mechanism 346 is used, the load of motor 341 in the step that takes a shorter period of time decreases, but the load of motor 341 in the step that takes a longer period of time increases.

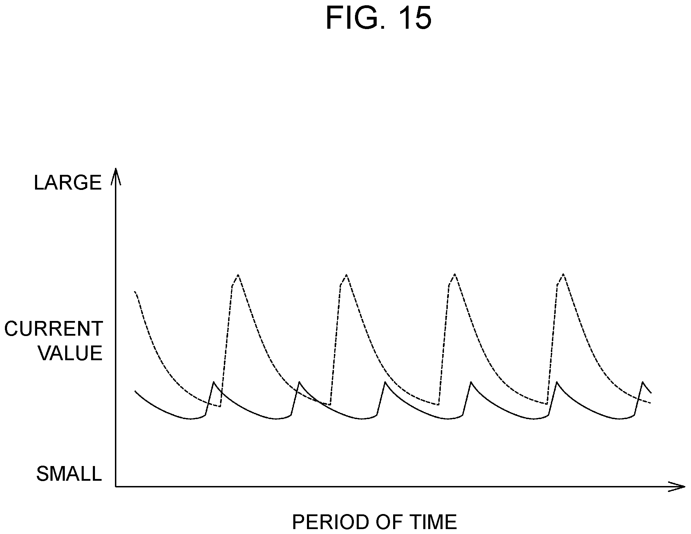

In a case where such assist mechanism 346 is used, it is preferable to appropriately set at least one of (i) a timing of assisting the movement of piston 331 by assist mechanism 346 and (ii) a force assisted by assist mechanism 346. In this way, as illustrated in Fig. 15, a current value of motor 341 (that is, the load applied to motor 341) can be made smaller (that is, the load is reduced) in a case where assist mechanism 346 is used (see a solid line in Fig. 15) than in a case where assist mechanism 346 is not used (see a broken line in Fig. 15). Fig. 15 is a graph in which the current value of the motor in a case where assist mechanism 346 is provided (see the solid line) is compared with the current value of the motor in a case where assist mechanism 346 is not provided (see the broken line). An assist ratio is preferably set within a range of 10 to 60. That is, the force assisted by assist mechanism 346 is preferably 10% to 60% of a motor output.

Oral cavity cleaning device 1 described above can also exhibit actions and effects substantially similar to oral cavity cleaning device 1 described in the first exemplary embodiment.

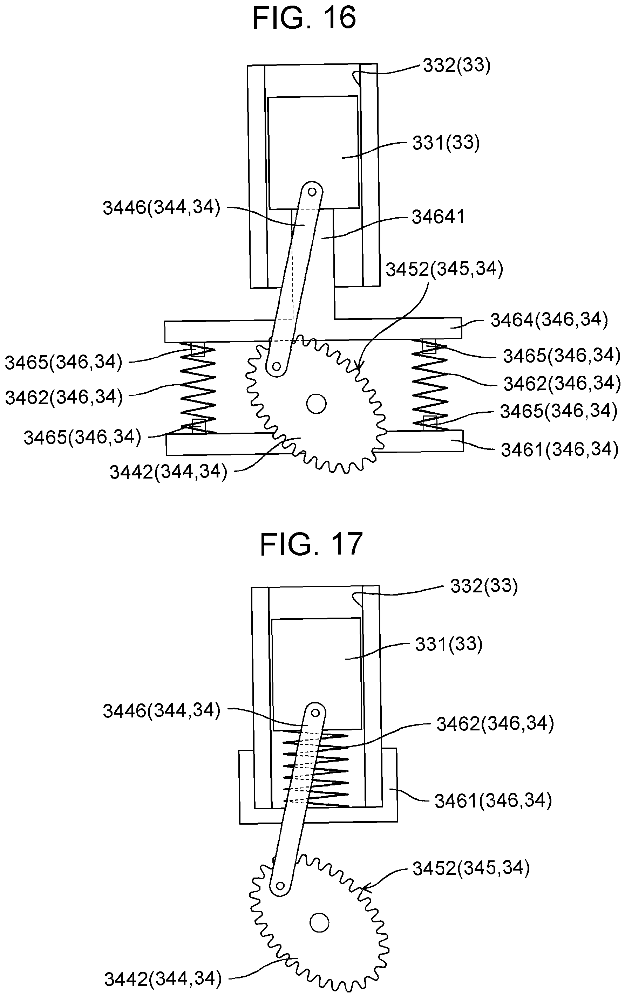

Fig. 16 is a diagram schematically illustrating a first modification of assist mechanism 346 included in pump drive mechanism 34 of oral cavity cleaning device 1 according to the second exemplary embodiment. Fig. 17 is a diagram schematically illustrating a second modification of assist mechanism 346 included in pump drive mechanism 34 of oral cavity cleaning device 1 according to the second exemplary embodiment. Assist mechanism 346 can have a configuration in which spring bearing ribs 3465 are provided instead of the pair of shafts 3463 as illustrated in Fig. 16, or can have a configuration in which one coil spring 3462 (that is, an example of the biasing member) is used as illustrated in Fig. 17. When one coil spring 3462 (that is, an example of the biasing member) is used, as illustrated in Fig. 17, one coil spring 3462 (that is, an example of the biasing member) may directly press piston 331, or a slider may be interposed between one coil spring 3462 (that is, an example of the biasing member) and piston 331.

In this manner, this configuration can also provide actions and effects similar to the above second exemplary embodiment.

### (Third exemplary embodiment)

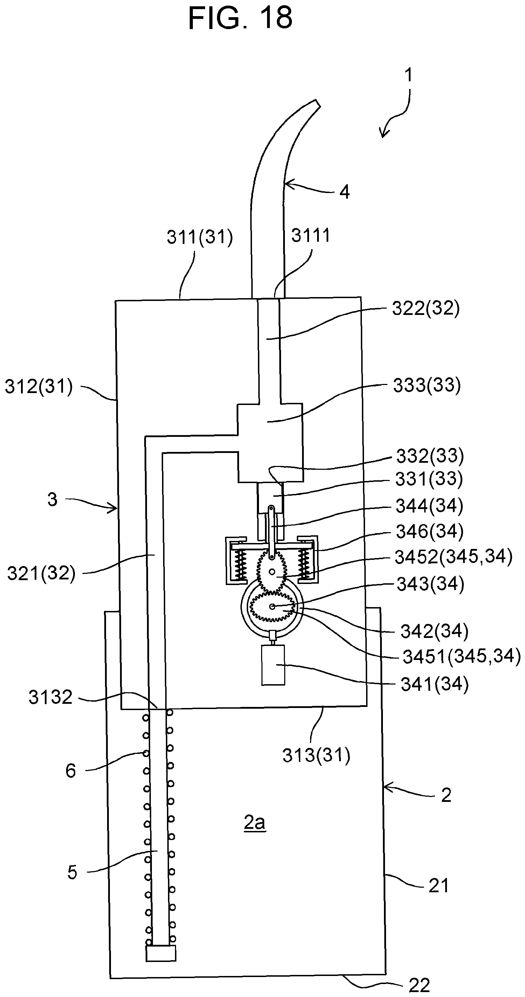

Fig. 18 is a diagram schematically illustrating oral cavity cleaning device 1 according to a third exemplary embodiment. As illustrated in Fig. 18, oral cavity cleaning device 1 according to the present exemplary embodiment includes tank 2, device body 3, and nozzle 4.

Tank 2 is formed in a bottomed tubular shape that is open upward and has a lower end closed, and reservoir 2a in which liquid can be stored is formed inside tank 2. Although water is available as the liquid stored in reservoir 2a, the liquid is not limited to water, and various liquids are available. For example, a cleaning liquid in which a cleaning agent is mixed in water is available.

In the present exemplary embodiment, device body 3 is supported in tank 2 in a slidable manner in a vertical direction (that is, a longitudinal direction of device body 3). At this time, device body 3 is supported in tank 2 in a slidable manner while having at least a lower end side disposed in reservoir 2a.

By sliding device body 3 downward in tank 2 to store device body 3 in tank 2, oral cavity cleaning device 1 can be housed in a more compact state when oral cavity cleaning device 1 is not used. By sliding device body 3 upward in tank 2 to pull out device body 3 to above tank 2, more liquids can be supplied to reservoir 2a of tank 2. Nozzle 4 is attached to device body 3 in the state where device body 3 is pulled out to above tank 2, and a liquid is supplied to reservoir 2a of tank 2, and thus oral cavity cleaning device 1 can be used.

As described above, oral cavity cleaning device 1 according to the present exemplary embodiment is an oral cavity cleaning device with a telescopic tank. In such an oral cavity cleaning device with a telescopic tank, device body 3 is supported by tank 2 in a slidable manner between a housed state in which device body 3 is housed in tank 2 and a pulled-out state in which device body 3 is pulled out from tank 2. That is, when oral cavity cleaning device 1 is not in use, device body 3 can be housed in tank 2 by being pushed into tank 2 after nozzle 4 is detached from device body 3. Oral cavity cleaning device 1 can be used by pulling out device body 3 from tank 2 and attaching nozzle 4 to device body 3.

At this time, it is preferable that device body 3 is detachably supported by tank 2. That is, it is preferable that device body 3 can be detached from tank 2 by pulling out device body 3 upward or device body 3 can be attached to tank 2 by pushing down device body 3 in a state where the lower end of device body 3 is inserted into tank 2. In this way, since it is possible to clean tank 2 and device body 3 in a state of being separated from each other, tank 2 and device body 3 can be kept cleaner.

Tank 2 is made of a polypropylene resin so as to be cleaned by a dishwasher, and is formed in the shape of a transparent or translucent container to improve design properties. Tank 2 is formed with a horizontal sectional shape of a perfect circle such that device body 3 can be relatively rotated.

In the present exemplary embodiment, tank 2 includes tubular body 21 having a substantially cylindrical shape that is open vertically, and bottom wall 22 that closes a lower opening of tubular body 21. A side portion (that is, tubular body 21) of tank 2 is provided with a liquid supply hole (not illustrated) through which liquid can be injected into reservoir 2a, and the liquid supply hole is closed by a liquid supply lid (not illustrated). In this manner, even in a state where tank 2 is disposed sideways, the liquid can be supplied to reservoir 2a in tank 2.

On the other hand, device body 3 includes housing 31 constituting an outer shell of device body 3, and housing 31 is formed in a tubular shape with both closed end sides in the vertical direction. Housing 31 (that is, one element of device body 3) is formed with a sectional shape of a perfect circle so as to be rotatable relative to tank 2.

Thus, in the present exemplary embodiment, housing 31 includes top wall 311 in a substantially disk shape, peripheral wall 312 in a substantially cylindrical shape extending downward from an outer peripheral edge of top wall 311, and bottom wall 313 in a substantially disk shape provided to close a lower opening of peripheral wall 312.

Top wall 311 is provided with nozzle attachment part 3111 Nozzle 4 through which a liquid can be discharged (that is, ejected) from the distal end thereof is detachably attached to nozzle attachment part 3111. Nozzle 4 is formed in a hollow elongated shape.

Peripheral wall 312 is provided with a button (not illustrated) for detaching nozzle 4 from housing 31 (that is, one element of device body 3) and a power switch (not illustrated) for starting or stopping oral cavity cleaning device 1 (that is, on and off of the power are switched).

Bottom wall 313 is provided with tube attachment part 3132 to which tube 5 is attached.

In the present exemplary embodiment, tube 5 is integrally attached to tube attachment part 3132, and is configured to be disposed in reservoir 2a of tank 2 when device body 3 is attached to tank 2 in a slidable manner. The liquid stored in reservoir 2a is introduced into housing 31 (that is, one element of device body 3) via tube 5.

Coil spring 6 that holds an attitude extending in a length direction of tube 5 is disposed around tube 5. By disposing coil spring 6 as described above around tube 5, tube 5 can be wound without being bent when device body 3 is housed in tank 2. In this way, tube 5 can be housed cleanly in tank 2. By disposing coil spring 6 around tube 5, tube 5 can be neatly extended from the wound state when device body 3 is pulled out from tank 2.

Liquid flow path 32 through which the liquid introduced via tube 5 can pass and can be supplied to nozzle 4 is formed inside housing 31 (that is, one element of device body 3). In the present exemplary embodiment, liquid flow path 32 is provided inside housing 31 (that is, one element of device body 3) while having one end communicating with an inner space of nozzle attachment part 3111 and the other end communicating with an inner space of tube attachment part 3132. In this manner, the liquid introduced via tube 5 passes through liquid flow path 32, and is supplied to nozzle 4.

In the present exemplary embodiment, liquid flow path 32 includes suction path 321 disposed upstream of liquid flow path 32 and discharge path 322 disposed downstream of liquid flow path 32. Suction path 321 and discharge path 322 are connected via pump 33. A suction valve (not illustrated) is provided between pump chamber 333 and suction path 321, and a discharge valve (not illustrated) is provided between pump chamber 333 and discharge path 322.

Pump drive mechanism 34 is disposed inside housing 31 (that is, one element of device body 3). Pump 33 is operated by pump drive mechanism 34, and thus, the liquid in reservoir 2a is sucked up through tube 5 and passes through liquid flow path 32 to be discharged (that is, ejected) from the distal end of nozzle 4.

As described above, oral cavity cleaning device 1 according to the present exemplary embodiment is a device that includes pump 33 and pump drive mechanism 34 that drives pump 33. In oral cavity cleaning device 1, the liquid is discharged by driving pump 33.

In the present exemplary embodiment, pump 33 includes pump chamber 333 with which suction path 321 and discharge path 322 communicate, cylinder 332 formed to communicate with a lower end of pump chamber 333, and piston 331 disposed in cylinder 332.

Piston 331 is coupled to pump drive mechanism 34, and reciprocated linearly in the vertical direction in cylinder 332 by pump drive mechanism 34. Piston 331 is reciprocated linearly in the vertical direction in cylinder 332, and thus, a volume of pump chamber 333 is changed.

Specifically, when piston 331 is moved downward in cylinder 332, the volume of pump chamber 333 increases, and the liquid in tank 2 flows into pump chamber 333 via tube 5 and suction path 321. Thereafter, in a state where the liquid flows into pump chamber 333, when piston 331 is moved upward in cylinder 332, the volume of pump chamber 333 decreases, and the liquid in pump chamber 333 is supplied to nozzle 4 via discharge path 322. The liquid supplied to nozzle 4 is discharged (that is, ejected) from the distal end of nozzle 4 to the outside thereof.

As described above, in the present exemplary embodiment, a suction step of sucking the liquid into pump chamber 333 is performed by moving piston 331 downward in cylinder 332, and a discharge step of discharging the liquid from pump chamber 333 to the outside is performed by moving the piston 331 upward. That is, the suction step and the discharge step are alternately performed by reciprocating piston 331 linearly between a top dead center and a bottom dead center. Thus, when piston 331 is reciprocated once in the vertical direction from the top dead center, the suction step and the discharge step are performed once each.

With such a configuration, the liquid is intermittently discharged from the distal end of nozzle 4 attached to device body 3.

Pump drive mechanism 34 includes motor 341, and piston 331 is reciprocated linearly in the vertical direction in cylinder 332 by driving motor 341.

Specifically, pump drive mechanism 34 has motor 341 and conversion mechanism 344 that converts a rotational motion of motor 341 into the reciprocating linear motion. Piston 331 is connected to conversion mechanism 344, and piston 331 is reciprocated linearly in the vertical direction in cylinder 332. Motor 341 is driven by an electric power supplied from a battery (e.g., a rechargeable battery or a dry battery) housed inside device body 3, or an external electric power.

In the present exemplary embodiment, pump drive mechanism 34 includes speed reduction mechanism 342 that reduces a rotational speed of motor 341, and transfer mechanism 343 that transfers a rotational motion reduced by speed reduction mechanism 342 to conversion mechanism 344. Thus, in the present exemplary embodiment, conversion mechanism 344 performs the conversion into the reciprocating linear motion in a state where speed reduction mechanism 342 reduces the rotational speed (that is, rotation speed) of motor 341 to a predetermined rotational speed (that is, rotation speed).

In the present exemplary embodiment, an inside of an oral cavity can be cleaned more efficiently.

Specifically, pump drive mechanism 34 includes transmission mechanism 345 that sets a moving speed of piston 331 when the discharge step is performed to be different from a moving speed of piston 331 when the suction step is performed. Piston 331 is reciprocated once such that a period of time taken for the discharge step is shorter than a period of time taken for the suction step.

Also in the present exemplary embodiment, pump drive mechanism 34 includes transmission mechanism 345 that sets a moving speed of piston 331 when the discharge step is performed to be different from a moving speed of piston 331 when the suction step is performed. Transmission mechanism 345 has elliptical gears 3451 and 3452 as non-circular gears, and transmission mechanism 345 includes two elliptical gears 3451 and 3452.

Also in the present exemplary embodiment, pump drive mechanism 34 includes assist mechanism 346 that assists the movement of piston 331.

Oral cavity cleaning device 1 described above can also exhibit actions and effects substantially similar to oral cavity cleaning device 1 described in the above-mentioned exemplary embodiments and the modifications thereof.

In the present exemplary embodiment, although the pump drive mechanism similar to pump drive mechanism 34 described in the second exemplary embodiment has been illustrated, the pump drive mechanism may be similar to pump drive mechanism 34 described in the first exemplary embodiment. That is, pump drive mechanism 34 not including assist mechanism 346 can be used.

Although oral cavity cleaning device 1 with a telescopic tank in which device body 3 is brought into the pulled-out state by rotating device body 3 relatively to tank 2 has been described in the present exemplary embodiment by way of example, the present disclosure is not limited thereto. For example, the oral cavity cleaning device with a telescopic tank in which device body 3 is brought into the pulled-out state by pulling out device body 3 in a sliding direction can be provided.

### [Actions and effects]

Hereinafter, a characteristic configuration of the oral cavity cleaning device described in the above-mentioned exemplary embodiments and the modifications thereof, and the effects obtained by the characteristic configuration will be described.

Oral cavity cleaning device 1 described in the above-mentioned exemplary embodiments and the modifications thereof includes tank 2 configured to store the liquid, and nozzle 4 to which the liquid stored in tank 2 is configured to be supplied via liquid flow path 32 and from which the liquid is configured to be discharged into the oral cavity. Oral cavity cleaning device 1 includes pump 33 that is disposed in liquid flow path 32. Pump 33 is configured to suck the liquid stored in tank 2, and discharge the liquid through nozzle 4, and pump drive mechanism 34 configured to drive pump 33. Pump 33 has piston 331 that is configured to be reciprocated linearly in one direction.

Here, in pump 33, a suction step of sucking the liquid into pump 33 and a discharge step of discharging the liquid from pump 33 are configured to performed alternately by reciprocating piston 331 linearly. Piston 331 is configured to be reciprocated once such that the period of time taken for the suction step and the period of time taken for the discharge step are different from each other.

As described above, oral cavity cleaning device 1 described in the above-mentioned exemplary embodiments and the modifications thereof can discharge the liquid with the water flow different from the water flow in a case where the ratio between the period of time taken for the discharge step and the period of time taken for the suction step is 1 : 1. As a result, the inside of the oral cavity can be cleaned more efficiently.

Pump drive mechanism 34 may have motor 341 and conversion mechanism 344 that is configured to convert the rotational motion of motor 341 into the reciprocating linear motion, and piston 331 may be coupled to conversion mechanism 344 and configured to be reciprocated linearly.

As described above, when motor 341 is used as a drive source of pump 33 and piston 331 is linearly reciprocated by conversion mechanism 344, oral cavity cleaning device 1 that can more efficiently clean the inside of the oral cavity can be obtained at a lower cost.

Piston 331 may be configured to be reciprocated once such that the period of time taken for the discharge step is shorter than the period of time taken for the suction step.

In this way, it is possible to more efficiently clean the inside of the oral cavity by minimizing unnecessary discharge of liquid that is not used for cleaning.

Pump drive mechanism 34 may include transmission mechanism 345 that is configured to set the moving speed of piston 331 when the discharge step is performed to be different from the moving speed of piston 331 when the suction step is performed. Transmission mechanism 345 may have the non-circular gears (that is, first gear 3441 and second gear 3442).

In this way, it is possible to more efficiently clean the inside of the oral cavity while simplifying the configuration.

The non-circular gears may be elliptical gears 3451 and 3452.

As described above, when elliptical gears 3451 and 3452 are used as the non-circular gears, it is possible to more easily set the ratio of the period of time taken for the discharge step to the period of time taken for the suction step.

Transmission mechanism 345 may have two elliptical gears 3451 and 3452.

In this way, it is possible to more easily set the ratio of the period of time taken for the discharge step to the period of time taken for the suction step while simplifying the configuration of transmission mechanism 345.

Pump drive mechanism 34 may include assist mechanism 346 that is configured to assist the movement of piston 331.

In this way, the load applied to motor 341 can be reduced.

Assist mechanism 346 may be configured to assist the movement of piston 331 when one step of the discharge step or the suction step is performed, the one step taking a shorter period of time than the other step within one reciprocation of the piston.

In this way, when the step of increasing the load on motor 341 is performed, the movement of piston 331 can be assisted, and the load applied to motor 341 can be reduced more efficiently.

Assist mechanism 346 may include coil spring 3462 (that is, an example of the biasing member) that biases piston 331 in one direction.

In this way, the load applied to motor 341 can be reduced while simplifying the configuration. In addition, there is also an advantage that an assist force (that is, a force pressing piston 331) by assist mechanism 346 can be easily adjusted.

### [Others]

Although the contents of the oral cavity cleaning device according to the present disclosure have been described above, the above-described exemplary embodiments and the modifications thereof are intended to illustrate the technique in the present disclosure. Thus, various changes, replacements, additions, omissions, and the like can be made within the scope of claims or equivalents thereof.

For example, the oral cavity cleaning device in which the configurations described in the above-mentioned exemplary embodiments and the modifications thereof are appropriately combined can be provided.

In the above-mentioned exemplary embodiments and the modifications thereof, oral cavity cleaning device 1 in which the period of time taken for the discharge step can be shorter than the period of time taken for the suction step has been illustrated. That is, oral cavity cleaning device 1 in which the period of time taken for the discharge step can be set only to be shorter than the period of time taken for the suction step is illustrated. Also, oral cavity cleaning device 1 in which a length of the period of time taken for the discharge step and a length of the period of time taken for the suction step can be switched therebetween has been illustrated. However, the configuration of the oral cavity cleaning device is not limited to such a configuration, and the oral cavity cleaning device in which the period of time taken for the discharge step is longer than the period of time taken for the suction step can be provided. It is also possible to provide an oral cavity cleaning device in which various ratios including a case where the period of time taken for the discharge step and the period of time taken for the suction step are the same as each other can be selected.

In the above-mentioned exemplary embodiments and the modifications thereof, although the period of time taken for the discharge step and the period of time taken for the suction step are mechanically different from each other by using the transmission mechanism, the present disclosure is not limited thereto. For example, a controller that controls the rotational speed of motor 341 is provided, and thus, the period of time taken for the discharge step and the period of time taken for the suction step may be controllable to be different from each other.

In addition, it is also possible to use two or more motors or two or more types of motors having different rotation speeds such that the periods of time of the discharge step and the suction step are different from each other.

In the above-mentioned exemplary embodiments and the modifications thereof, although pump drive mechanism 34 has motor 341 and conversion mechanism 344 that converts the rotational motion of motor 341 into the reciprocating linear motion, pump drive mechanism 34 does not have to have motor 341 and conversion mechanism 344. For example, piston 331 can be configured to be reciprocated linearly by using an electromagnetic actuator.

The configuration of the oral cavity cleaning device is not limited to a separable tank or the telescopic tank, and the present disclosure can be applied to oral cavity cleaning devices having various configurations.

Specifications (shape, size, layout, and the like) of the device body, the tank, and other details can be changed as appropriate.

### INDUSTRIAL APPLICABILITY

As described above, since the inside of the oral cavity can be more efficiently cleaned, the oral cavity cleaning device according to the present disclosure can be used for various kinds of oral cavity cleaning devices, including home and business uses.

### REFERENCE MARKS IN THE DRAWINGS

- 1: oral cavity cleaning device
- 2: tank
- 2a: reservoir
- 21: tubular body
- 211: liquid supply lid
- 22: bottom wall
- 221: bottom surface
- 3: device body
- 31: housing
- 311: top wall
- 3111: nozzle attachment part
- 312: peripheral wall
- 3121: recess
- 313: bottom wall
- 3131: bottom surface
- 3132: tube attachment part
- 32: liquid flow path
- 321: suction path
- 3211: pipe
- 322: discharge path
- 3221: pipe
- 33: pump
- 331: piston
- 332: cylinder
- 333: pump chamber
- 34: pump drive mechanism
- 341: motor
- 3411: motor shaft
- 342: speed reduction mechanism
- 3421: pinion gear
- 3422: speed reduction gear
- 3423: first output shaft
- 3431: first transfer gear
- 3432: second transfer gear
- 3433: second output shaft
- 343: transfer mechanism
- 344: conversion mechanism
- 3441: first gear
- 3442: second gear
- 3443: third output shaft
- 3444: cam
- 3445: screw
- 3446: rod
- 34461: coupling shaft
- 345: transmission mechanism
- 3451: elliptical gear
- 3452: elliptical gear
- 346: assist mechanism
- 3461: spring bearing
- 3462: coil spring
- 3463: pair of shafts
- 3464: slider
- 34641: pressing part
- 4: nozzle
- 5: tube
- 6: coil spring

## Claims

1. An oral cavity cleaning device comprising:
a tank configured to store a liquid;
a nozzle to which the liquid stored in the tank is configured to be supplied via a liquid flow path and from which the liquid is configured to be discharged into an oral cavity;
a pump that is disposed in the liquid flow path, the pump being configured to suck the liquid stored in the tank and being configured to discharge the liquid from the nozzle; and
a pump drive mechanism configured to drive the pump,
wherein
the pump comprises a piston which is configured to be reciprocated linearly in one direction,
the piston is configured to be reciprocated linearly so as to alternately perform a suction step of sucking the liquid into the pump and a discharge step of discharging the liquid from the pump, and
the piston is configured to be reciprocated once in such a way that a period of time taken for the suction step and a period of time taken for the discharge step are different from each other.

2. The oral cavity cleaning device according to Claim 1, wherein
the pump drive mechanism comprises a motor and a conversion mechanism that is configured to convert a rotational motion of the motor into a reciprocating linear motion, and
the piston is coupled to the conversion mechanism and configured to be reciprocated linearly.

3. The oral cavity cleaning device according to Claim 1 or 2, wherein
the piston is configured to be reciprocated once in such a way that the period of time taken for the discharge step is shorter than the period of time taken for the suction step.

4. The oral cavity cleaning device according to any one of Claims 1 to 3, wherein
the pump drive mechanism comprises a transmission mechanism that is configured to set a moving speed of the piston when the discharge step is performed to be different from a moving speed of the piston when the suction step is performed, and
the transmission mechanism comprises a non-circular gear.

5. The oral cavity cleaning device according to Claim 4, wherein
the non-circular gear is at least one elliptical gear.

6. The oral cavity cleaning device according to Claim 5, wherein
the transmission mechanism comprises two elliptical gears.

7. The oral cavity cleaning device according to any one of Claims 1 to 6, wherein
the pump drive mechanism comprises an assist mechanism that is configured to assist movement of the piston.

8. The oral cavity cleaning device according to Claim 7, wherein the assist mechanism is configured to assist the movement of the piston when one step of the discharge step or the suction step is performed, the one step taking a shorter period of time than the other step within one reciprocation of the piston.

9. The oral cavity cleaning device according to Claim 7 or 8, wherein
the assist mechanism comprises a biasing member that biases the piston in one direction.
